# EUROPÄISCHE PATENTANMELDUNG

(11) **EP 3 481 034 A1**
(43) Veröffentlichungstag der Anmeldung: **08.05.2019**
(21) Anmeldenummer: 18209062.1
(22) Anmeldetag: 18.06.2014
(51) Int. Cl.: H04L 29/08, H04L 12/28, G06F 21/62, G07C 9/00, H04W 4/80

(54) **VERFAHREN ZUM BETRIEB EINES KOMMUNIKATIONSSYSTEMS, INSBESONDERE ZUGANGSSYSTEMS**

(30) Priorität: 17.06.2014 EP 14172814
(62) Teilanmeldung aus: 14173031.7
(71) Anmelder: BURG-WÄCHTER KG, 58540 Meinerzhagen (DE)
(72) Erfinder: LÜLING, Harald, 58540 Meinerzhagen (DE); BAGHERI, Hossein, 58135 Hagen (DE)
(74) Vertreter: Rausch Wanischeck-Bergmann Brinkmann

(57) **Zusammenfassung**

Die Erfindung betrifft ein Verfahren zum Betrieb eines Kommunikationssystems, insbesondere Zugangssystems, mit einer technischen Einrichtung (3), insbesondere einem elektronischen Türschloss, und einem mobilen Endgerät (10), das eine datentechnische Kommunikationsschnittstelle (11) aufweist, wobei eine physisch von der technischen Einrichtung (3) getrennte Kommunikationseinrichtung (4) vorgesehen ist, welche ebenfalls eine datentechnische Kommunikationsschnittstelle (11) aufweist, wobei eine datentechnische Kommunikationsverbindung zwischen dem mobilen Endgerät (10) einerseits und der technischen Einrichtung (3) andererseits unter Zwischenordnung der Kommunikationseinrichtung (4) ausgebildet wird, wobei die technische Einrichtung (3) und die Kommunikationseinrichtung (4) mittels Kurzstrecken-Funktechnik miteinander kommunizieren, wobei zwischen dem mobilen Endgerät (10) und der Kommunikationseinrichtung (4), insbesondere per Wide-Area-Network eine datentechnische Kommunikationsverbindung (16, 17) ausgebildet wird, wobei das mobile Endgerät (10) und die Kommunikationseinrichtung (4) oder das mobile Endgerät (10) und die technische Einrichtung (3) direkt miteinander kommunizieren und wobei das mobile Endgerät (10) Öffnungs- und/oder Schließbefehle an das elektronische Schloss (3) übermittelt.

## Beschreibung

Die Erfindung betrifft ein Verfahren zum Betrieb eines Kommunikationssystems, insbesondere Zugangssystems, mit einer technischen Einrichtung, insbesondere einem elektronischen Türschloss, und einem mobilen Endgerät, das eine datentechnische Kommunikationsschnittstelle aufweist.

Derartige Verfahren sind aus dem Stand der Technik bekannt. Sie dienen beispielsweise dazu, technische Einrichtungen wie Türschlösser fernsteuern zu können. Technische Einrichtungen umfassen insbesondere haustechnische Einrichtungen wir Kameras, elektronische Türschlösser, Aufzuganlagen und/oder dergleichen.

Gemäß einem bekannten Verfahren wird zwischen einer technischen Einrichtung einerseits, beispielsweise einer Türsprechanlage, und einem mobilen Endgerät anderseits eine direkte datentechnische Kommunikationsverbindung ausgebildet. Ein Datenaustausch, beispielsweise eine Sprachübertragung, erfolgt unmittelbar zwischen den beiden Geräten.

Eine datentechnische Kommunikation mit einem Türschloss ist auf diese Weise nur unzureichend möglich. Ein Grund ist die in der Regel nur geringe zur Verfügung stehende Energie im Türschloss. Es handelt sich hierbei üblicherweise um gekapselte Systeme, welche über eine autarke Energieversorgung in Form einer Batterie und/oder dergleichen verfügen. Eine aufwendige Kommunikation, beispielsweise per Internet, scheitert daher an der damit verbundenen hohen Energieaufnahme.

Vor diesem Hintergrund ist es die **Aufgabe** der vorliegenden Erfindung, ein gattungsgemäßes Verfahren hinsichtlich der Anwendungsmöglichkeiten zu erweitern, in der Handhabung zu verbessern, hinsichtlich der Sicherheit zu verbessern und kostengünstiger zu machen.

Zur **Lösung** schlägt die Erfindung ein Verfahren mit den Merkmalen des Anspruchs 1 vor.

Der Erfindung liegt der Kerngedanke zugrunde, dass eine Kommunikation zwischen einem mobilen Endgerät eines Nutzers einerseits und einer technischen Einrichtung wie beispielsweise einem Türschloss andererseits vorteilhafterweise indirekt erfolgen kann. Erfindungsgemäß ist nämlich vorgesehen, dass das mobile Endgerät eine datentechnische Kommunikationsverbindung mit der Kommunikationseinrichtung aufbaut. Diese Kommunikationsverbindung kann dem Grunde nach beliebig gewählt werden. Es kommt beispielsweise eine Wide-Area-Network-Verbindung in Betracht, beispielsweise per Internet, wie GSM und/oder dergleichen. Auch kommen Kommunikationsverbindungen wie WLAN, LAN, Bluetooth und/oder dergleichen in Betracht. Die Kommunikationseinrichtung dient als eine Art Wandler. Sie ermöglicht eine Kommunikation mit der technischen Einrichtung, insbesondere dem elektronischen Türschloss mittels der von der technischen Einrichtung jeweils bereitgestellten Kommunikationsschnittstelle. Hierbei kann es sich im Falle eines elektronischen Türschlosses beispielsweise um eine Bluetooth-, RFID- und/oder NFC-Schnittstelle handeln. Eine andere Kommunikationsschnittstelle seitens der technischen Einrichtung scheidet nämlich in der Regel aus, da diese zu viel Energie benötigt. Kommunikationsschnittstellen, die ausscheiden, sind beispielsweise eine Internet- und/oder GSM-Schnittstelle.

Die Erfindung ermöglicht die Kontrolle derartiger technischer Einrichtungen durch Benutzer mit ihren mobilen Endgeräten, wobei sich diese auch weit entfernt vom Türschloss aufhalten können, beispielsweise auf Geschäftsreise, im Urlaub und/oder dergleichen. Die Benutzer können vorteilhafterweise über das Internet mit der Kommunikationseinrichtung kommunizieren, welche wiederum die Kommunikationsverbindung zur technischen Einrichtung ermöglicht. So kann beispielsweise ein Benutzer per Smartphone aus dem Urlaub das elektronische Türschloss seiner Haustür zuhause öffnen, wenn beispielsweise ein Reinigungsdienst in das Haus möchte und/oder dergleichen.

Bei der Kommunikationseinrichtung handelt es sich um eine Art Rechnersystem, welches eine erste datentechnische Kommunikationsschnittstelle zur Kommunikation mit mobilen Endgeräten und eine zweite datentechnische Kommunikationsschnittstelle zur Kommunikation mit der technischen Einrichtung aufweist. Diese beiden Kommunikationsschnittstellen können unterschiedlich ausgebildet sein. Vorzugsweise kann die Kommunikationseinrichtung gleichzeitig beide Kommunikationsschnittstellen betreiben. Die Kommunikationseinrichtung kann eine Kamera umfassen. Es kann sich bei der gesamten Kommunikationseinrichtung um eine in einem Gehäuse gekapselte Einrichtung handeln mit gegebenenfalls zusätzlichen Funktionen wie CCD-Chip und/oder dergleichen.

Bei der technischen Einrichtung handelt es sich vorzugsweise um ein elektronisches Türschloss. Ergänzend können weitere technische Einrichtungen vorgesehen sein. Bei einer haustechnischen Einrichtung handelt es sich beispielsweise um eine Einrichtung aus dem Bereich der Gebäudetechnik. Hierbei kann es sich um eine Einrichtung für die Gas-/ Wassertechnik, die Raumlufttechnik, die Elektrotechnik/Nachrichtentechnik, die Sicherheitstechnik und/oder dergleichen handeln. Es handelt sich beispielsweise um eine Türsprech-/Lautsprecheranlage, eine Anlage zur Zutrittskontrolle, eine Anlage zur Gebäudeautomation, eine Kamera, eine Heizungsanlage, einen (Personen-)Aufzug, eine Beleuchtungseinrichtung und/oder dergleichen.

Erfindungsgemäß kann die Kommunikationseinrichtung eine Kamera umfassen. Hierbei handelt es sich vorzugsweise um eine autarke Einheit. Die Kamera weist einen Bildsensor, einen Mikroprozessor, einen Speicher, eine datentechnische Kommunikationsschnittstelle und/oder dergleichen auf. Die Kamera kann somit autark innerhalb des Verfahrens als solche und als Kommunikationseinrichtung betrieben werden, insbesondere ohne auf einen externen Rechner, ein externes Betriebssystem und/oder dergleichen zur Kommunikation angewiesen zu sein. Somit kann ein stabiles System geschaffen werden, was unabhängig von der Software eines externen Rechners und dergleichen ist.

Bei dem mobilen Endgerät handelt es sich insbesondere um eine drahtlos kommunizierende Einrichtung. Es kann sich um ein Mobiltelefon, ein Smartphone, einen Tablet-Computer, ein Laptop und/oder dergleichen handeln. Das mobile Endgerät verfügt insbesondere über eine autarke Energieversorgung, beispielsweise einen Akku.

Die Kommunikationseinrichtung und das mobile Endgerät weisen datentechnische Kommunikationsschnittstellen auf. Es handelt sich insbesondere um die gleiche Kommunikationsschnittstelle. Es kann sich um Kommunikationsschnittstellen für eine drahtgebundene und/oder drahtlose datentechnische Kommunikation handeln. Es kann sich insbesondere um eine Bluetooth-, NFC-, RFID-, Local-Area-Network-, Wireless-Local-Area-Network- und/oder Wide-Area-Network-Schnittstelle handeln. Bluetooth hat ab der Version 4.0 den Vorteil eines sog. low energy-Profils. Dadurch lässt sich diese Kommunikationsschnittstelle besonders energiesparend betreiben.

Die Kommunikationseinrichtung ist physisch von der technischen Einrichtung einerseits und dem mobilen Endgerät andererseits getrennt. Dies bedeutet, dass sie kein Bestandteil des mobilen Endgeräts oder der technischen Einrichtung ist. Sie ist insbesondere von der technischen Einrichtung und/oder dem mobilen Endgerät beabstandet angeordnet. Sie kann einem zu überwachenden und/oder zugänglich zu machenden Haushalt zugeordnet sein. Sie kann innerhalb des Haushalts angeordnet sein. Es kann sich hierbei um einen Heim-Server und/oder dergleichen handeln. Die Kommunikationseinrichtung kann dazu ausgebildet sein, baukastenartig mit einer Vielzahl von technischen Einrichtungen und/oder mobilen Endgeräten datentechnisch gekoppelt zu werden. Sie ist vorzugsweise dem Benutzer der technischen Einrichtungen individuell zugeordnet. Nur der Benutzer selbst hat Zugriff auf die Kommunikationseinrichtung. Es handelt sich bei der Kommunikationseinrichtung um eine unabhängig von den technischen Einrichtungen und dem mobilen Endgerät betreibbare Vorrichtung.

Zur Verwendung des mobilen Endgeräts mit einer technischen Einrichtung, insbesondere dem Türschloss kann das mobile Endgerät vorab autorisiert werden. Hierzu sendet das mobile Endgerät eine Anfrage an die Kommunikationseinrichtung. Dies kann per Internet, Mobilfunknetz, WLAN, Bluetooth und/oder dergleichen geschehen. Die Kommunikationseinrichtung entscheidet, ob das mobile Endgerät autorisiert wird. Hierzu kann eine vorherige Freischaltung des mobilen Endgeräts in der Kommunikationseinrichtung erforderlich sein. Es kann aber auch eine Code-Abfrage auf dem mobilen Endgerät erfolgen. Das mobile Endgerät kann von der Kommunikationseinrichtung identifiziert werden anhand von eineindeutigen Merkmalen, wie einer MAC-Adresse und/oder dergleichen.

Sofern das mobile Endgerät autorisiert wurde, kann eine direkte datentechnische Kommunikationsverbindung zwischen dem Endgerät und der Kommunikationseinrichtung ausgebildet werden. Die Ausbildung dieser Kommunikationsverbindung kann von der Kommunikationseinrichtung initiiert werden. Es kann alternativ oder ergänzend vorgesehen sein, dass das autorisierte mobile Endgerät, beispielsweise mit Hilfe einer darauf installierten Anwendung, freigeschaltet ist, von sich aus die Kommunikationseinrichtung direkt anzusprechen. Erfindungsgemäß ist insbesondere vorgesehen, dass nach der Autorisierung des mobilen Endgeräts ein peer-to-peer-Netzwerk aufgebaut wird. Dieses Netzwerk zeichnet sich durch (ausschließlich) direkte Rechner-zu-Rechner-Verbindungen aus. Eine alternative Bezeichnung hierfür ist "Querkommunikation". Ein Vorteil eines solchen Systems ist, dass während einer bereits eingeleiteten Kommunikation kein zentraler Server erforderlich ist, dessen Leistung, Bandbreite, Übertragungsgeschwindigkeit und so weiter die Performance des Gesamtsystems limitieren würde. Es ist innerhalb eines größeren Systems zur Zugänglichmachung von technischen Einrichtungen beispielsweise denkbar, dass zwei oder mehr mobile Endgeräte jeweils völlig unabhängig voneinander mit jeweils einer technischen Einrichtung kommunizieren. Für jede Kommunikationsverbindung kommt es nur auf die Performance der beiden miteinander kommunizierenden Teilnehmer an.

Das erfindungsgemäße Verfahren vereint somit in synergetischer Weise mehrere Vorteile miteinander. Gleichzeitig werden Nachteile bekannter Systeme überwunden. Durch die Autorisierung jedes mobilen Endgeräts wird eine besonders hohe Sicherheit erreicht. Es kann sichergestellt werden, dass nur von einem Benutzer freigegebene mobile Endgeräte auf die technischen Einrichtungen zugreifen können. Gleichzeitig ermöglicht es die Erfindung, dass an sich nicht für bestimmte Kommunikationswege geeignete technische Einrichtungen wie elektronische Türschlösser dennoch unter Verwendung ganz anderer Kommunikationswege betätigt werden können. Die erfindungsgemäße Kommunikationseinrichtung stellt eine Art Wandler bereit, welcher die datentechnischen Kommunikationsmöglichkeiten der technischen Einrichtungen einerseits und der mobilen Endgeräte andererseits ausnutzt und einander verständlich macht.

Gemäß einer vorteilhaften Weiterbildung der Erfindung wird zwischen dem mobilen Endgerät und der Kommunikationseinrichtung per Internet eine datentechnische Kommunikationsverbindung ausgebildet. Dies kann beispielsweise über das Mobilfunknetz, ein WLAN und/oder dergleichen geschehen. Entscheidend ist, dass das mobile Endgerät auf diese Weise dem Grunde nach an einem beliebigen Ort auf der Welt dazu benutzt werden kann, die Kommunikationseinrichtung und/oder eine technische Einrichtung zu überwachen und/oder zu bedienen. Hierzu ist insbesondere vorgesehen, dass zwischen dem mobilen Endgerät und der technischen Einrichtung sowohl per Internet als auch per Kurzstrecken-Funktechnik eine datentechnische Kommunikationsverbindung ausgebildet wird. Diese datentechnische Kommunikationsverbindung kann erst ausgebildet werden, sofern das mobile Endgerät zuvor über die Internetverbindung von der Kommunikationseinrichtung autorisiert worden ist. Der vorstehend thematisierte Grundgedanke des peer-to-peer-Netzwerks lässt sich also auch mit mobilen Endgeräten realisieren, welche sich entfernt der technischen Einrichtungen befinden, das heißt dem Grunde nach nur über ein öffentliches, insbesondere globales Datennetz mit den technischen Einrichtungen kommunizieren können.

Die datentechnische Kommunikationsverbindung per Kurzstrecken-Funktechnik zwischen der Kommunikationseinrichtung und der technischen Einrichtung kann per Bluetooth, RFID, NFC und/oder dergleichen ausgebildet werden.

Gemäß einer vorteilhaften Weiterbildung der Erfindung wird im Falle eines Manipulationsversuchs an der Kommunikationseinrichtung, an einer technischen Einrichtung, dem Rechnersystem und/oder dem mobilen Endgerät eine Autorisierung des mobilen Endgeräts und/oder einer technischen Einrichtung aufgehoben. Ein Manipulationsversuch kann beispielsweise darin bestehen, eine der Einrichtungen mechanisch aufzubrechen. Es können entsprechende Sensoren vorgesehen sein, die einen solchen Aufbruchversuch detektieren. Die Autorisierung des mobilen Endgeräts und/oder der technischen Einrichtung wird anschließend aufgehoben. Dies bedeutet, dass keine datentechnische Kommunikationsverbindung zwischen dem mobilen Endgerät einerseits und der technischen Einrichtung andererseits mehr ausgebildet werden kann. Im Falle einer erneuten Autorisierung durch die Kommunikationseinrichtung wäre dies natürlich wieder möglich. Die technische Einrichtung kann einen Speicher aufweisen. In diesem Speicher kann eine Liste mit autorisierten mobilen Endgeräten gespeichert sein. Im Falle eines Manipulationsversuchs kann vorgesehen sein, dass der gesamte Speicher, das heißt alle Autorisierungen gelöscht werden. Die Autorisierung kann ergänzend oder alternativ aber auch im mobilen Endgerät und/oder der technischen Einrichtung selbst aufgehoben werden. Hierzu weist gegebenenfalls die Anwendung auf dem mobilen Endgerät eine entsprechende Funktion zur automatischen Aufhebung der Autorisierung auf. Es kann auch vorgesehen sein, dass Manipulationsversuche an die Kommunikationseinrichtung gemeldet werden und dieses an die technischen Einrichtungen und/oder das mobile Endgerät entsprechende Befehle zur Aufhebung aller Autorisierungen sendet. Die Sicherheit wird durch die beschriebenen Maßnahmen weiter erhöht.

Gemäß einer vorteilhaften Weiterbildung der Erfindung wird ein Bild einer Kamera an das zuvor autorisierte mobile Endgerät übertragen. Die Verwender können somit ihre mobilen Endgeräte dazu nutzen, den Eingangsbereich beispielsweise einer Tür zu überwachen. Im Falle einer Tür mit Klingel und elektronischem Türschloss kann vorgesehen sein, dass vom mobilen Endgerät Öffnungs- und/oder Schließbefehle an das als technische Einrichtung verwendete elektronische Schloss übermittelt werden. Der Nutzer kann auf diese Art und Weise von jedem Ort im Haus aus das Türschloss bedienen. Er kann es sogar im Falle einer Internetverbindung von jedem beliebigen Ort auf der Welt aus bedienen. Dies ermöglicht es beispielsweise, eine bekannte und autorisierte Person in eine Wohnung zu lassen, wenn diese entsprechend beispielsweise auf einem an das mobile Endgerät übermittelten Kamerabild detektiert wird.

Gemäß einer vorteilhaften Weiterbildung der Erfindung wird der Kommunikationseinrichtung und/oder einer technischen Einrichtung per DDNS eine nach außen feste Kennung zugewiesen. Hierbei handelt es sich um einen sogenannten dynamischen DNS-Dienst. Dieser dient im Falle einer Internetverbindung mit wechselnder IP-Adresse dazu, dieser wechselnden IP-Adresse jeweils einen konstanten Domain-Namen zuzuweisen. Dies ist mit Kennung im Sinne dieser Weiterbildung gemeint. Dadurch besteht die Möglichkeit, die technischen Einrichtungen und/oder das Rechnersystem auch im Falle eines Privathaushalts über das Internet jederzeit ansprechen zu können.

Gemäß einer vorteilhaften Weiterbildung der Erfindung können Daten von einer oder mehreren technischen Einrichtungen gespeichert werden. Es kann sich um Audio-, Video- und/oder Bilddaten handeln. Dadurch kann der Funktionsumfang vergrößert und die Sicherheit erhöht werden.

Gemäß einer vorteilhaften Weiterbildung der Erfindung kann eine Temperaturmesseinrichtung als technische Einrichtung vorgesehen sein. In Abhängigkeit der gemessenen Temperatur können beispielsweise Rollläden, Fenster, eine Heizungsanlage und/oder dergleichen, insbesondere automatisiert, gesteuert werden.

Es können ganz allgemein vorprogrammierte Szenarien automatisiert ausgeführt werden, wenn die Kamera und gegebenenfalls weitere Sensoren bestimmte, auslösende Signale liefern.

Weitere Vorteile und Merkmale ergeben sich anhand der nachfolgenden Figurenbeschreibung. Es zeigen:
- Fig. 1: schematisch eine erste Ausführungsform eines erfindungsgemäßen Verfahrens; und
- Fig. 2: schematisch eine zweite Ausführungsform eines erfindungsgemäßen Verfahrens.

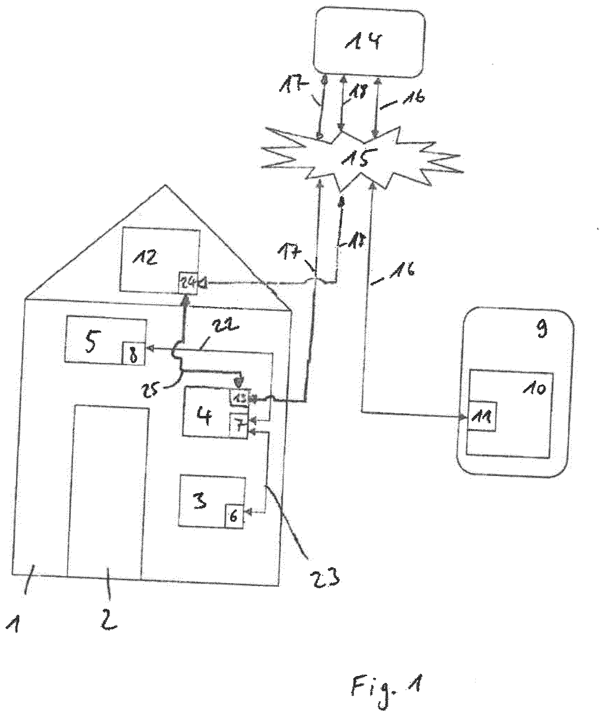

Fig. 1 zeigt schematisch ein Gebäude 1. Dieses verfügt über eine Tür 2. Die Tür 2 ist mittels eines elektronischen Türschlosses 3 verschließbar. Das Türschloss 3 umfasst eine neben der Tür 2 befindliche Steuerungseinrichtung, beispielsweise eine Klingel, eine Zifferntastatur und/oder dergleichen. Oberhalb des Türschlosses 3 ist eine Kamera 4 angeordnet. Diese dient dazu, den Raum vor der Tür 2 visuell zu überwachen. Sie dient zudem als Kommunikationseinrichtung.

Im Gebäude 1 befindet sich zudem ein Videorekorder 5. Außerdem kann im Gebäude 1 ein Rechnersystem 12 installiert sein. Die technischen Einrichtungen Türschloss 3, Kamera 4 und Videorekorder 5 sowie das Rechnersystem 12 können miteinander datentechnisch kommunizieren. Hierzu weisen die technischen Einrichtungen und das Rechnersystem 12 Kommunikationsschnittstellen 6, 7, 8, 13 auf. Hierbei handelt es sich beispielsweise um WLAN-, LAN- oder Bluetooth-Schnittstellen. Zwischen diesen Kommunikationsschnittstellen 6, 7, 8 können datentechnische Kommunikationsverbindungen 22, 23 ausgebildet werden. Die technischen Einrichtungen Türschloss 3, Kamera 4 und/oder Videorekorder 5 kommunizieren auf diese Weise direkt miteinander, im Sinne eines peer-to-peer-Netzwerks. Die Möglichkeit einer Kommunikation der technischen Einrichtungen mit dem Rechnersystem 12 kann gegebenenfalls entbehrlich sein.

Ein Benutzer 9 verfügt über ein mobiles Endgerät 10. Hierbei handelt es sich beispielsweise um ein Smartphone. Das mobile Endgerät 10 weist eine Kommunikationsschnittstelle 11 auf. Die Kommunikationsschnittstelle 11 dient dazu, mit einem Wide-Area-Network, insbesondere Mobilfunknetz 15 zu kommunizieren. Das Mobilfunknetz 15 verfügt über eine Vermittlungsstelle 14. Diese stellt eine Verbindung zwischen zwei Teilnehmern des Mobilfunknetzes 15 her. Die Vermittlungsstelle 14 umfasst beispielsweise eine Rechnereinheit mit einem Mikroprozessor, einem Speicher, Kommunikationsschnittstellen und/oder dergleichen.

Die Kamera 4 ist individuell dem Gebäude 1, insbesondere dem Benutzer 9, zugeordnet. Es kann vorgesehen sein, dass nur der Benutzer 9 Zugriff auf die Kamera 4 hat.

Die Kamera 4 verfügt über die Kommunikationsschnittstelle 13. Diese ist als Schnittstelle für das Internet, insbesondere das Mobilfunknetz 15, ausgebildet. Bei einer entsprechenden Anfrage kann eine Kommunikationsverbindung zwischen dem mobilen Endgerät 10 des Benutzers 9 und der Kamera 4 ausgebildet werden. Hierzu werden zwei datentechnische Kommunikationsverbindungen 16, 17 jeweils über das Mobilfunknetz 15 mit der Vermittlungsstelle 14 ausgebildet.

Durch diese Kommunikationsverbindung kann das mobile Endgerät 10 des Benutzers 9 von der Kamera 4 autorisiert werden. Autorisiert meint, dass das mobile Endgerät 10 für eine direkte Kommunikation mit einer technischen Einrichtung freigeschaltet ist. Die technischen Einrichtungen können beispielsweise nach der Autorisierung so programmiert werden, dass sie für eine Kommunikation mit dem mobilen Endgerät 10 eingerichtet sind.

Das autorisierte mobile Endgerät 10 kann über das Mobilfunknetz 15 mit dem Rechnersystem 12 kommunizieren. Es kann somit eine Kommunikationsverbindung 18 zwischen dem Rechnersystem 12 und dem Mobilfunknetz 15 beziehungsweise der Vermittlungsstelle 14 ausgebildet werden. Über die Kommunikationsverbindungen 18, 16 kann das mobile Endgerät 10 direkt mit dem Rechnersystem 12 datentechnisch kommunizieren. Über eine Kommunikationsschnittstelle 24 kann das Rechnersystem 12 wiederum mit der Kamera 4 per Kommunikationsverbindung 25 kommunizieren.

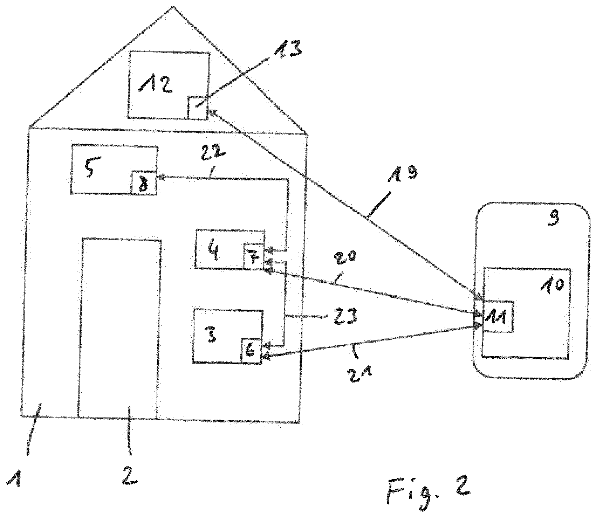

Fig. 2 zeigt eine alternative Ausführungsform des erfindungsgemäßen Verfahrens. Im Unterschied zu der Ausführungsform nach Fig. 1 kommunizieren das mobile Endgerät 10 einerseits und das Rechnersystem 12 beziehungsweise die technischen Einrichtungen Türschloss 3, Kamera 4 und Videorekorder 5 andererseits nicht über ein Mobilfunknetz 15, sondern vielmehr über eine lokale datentechnische Kommunikationsverbindung.

Der Benutzer 9 möchte mit seinem mobilen Endgerät 10 beispielsweise auf das Türschloss 3 zugreifen. Dies ist jedoch gegebenenfalls nicht möglich, ohne dass das mobile Endgerät 10 vom Rechnersystem 12 oder der Kamera 4 autorisiert wird. Somit wird zunächst eine datentechnische Kommunikationsverbindung 19 zwischen dem mobilen Endgerät 10 und dem Rechnersystem 12 und/oder der Kamera 4 ausgebildet. Es handelt sich hierbei um eine direkte Kommunikationsverbindung.

Sofern das mobile Endgerät 10 autorisiert wurde, kann das mobile Endgerät 10 mit den technischen Einrichtungen, beispielsweise dem Türschloss 3 kommunizieren. Dies erfolgt unter Zwischenordnung der Kamera 4. Gegebenenfalls kann aber auch eine direkte datentechnische Kommunikationsverbindung 21 zwischen dem Türschloss 3 und dem mobilen Endgerät 10 ausgebildet werden. Ebenso wäre eine solche mit dem Videorekorder 5 denkbar.

**Bezugszeichen**

| | | | |
|---|---|---|---|
| 1 | Gebäude | 17 | Kommunikationsverbindung |
| 2 | Tür | 18 | Kommunikationsverbindung |
| 3 | Türschloss | 19 | Kommunikationsverbindung |
| 4 | Kamera | 20 | Kommunikationsverbindung |
| 5 | Videorekorder | 21 | Kommunikationsverbindung |
| 6 | Kommunikationsschnittstelle | 22 | Kommunikationsverbindung |
| 7 | Kommunikationsschnittstelle | 23 | Kommunikationsverbindung |
| 8 | Kommunikationsschnittstelle | 24 | Kommunikationsschnittstelle |
| 9 | Benutzer | 25 | Kommunikationsverbindung |
| 10 | mobiles Endgerät | | |
| 11 | Kommunikationsschnittstelle | | |
| 12 | Rechnersystem | | |
| 13 | Kommunikationsschnittstelle | | |
| 14 | Vermittlungsstelle | | |
| 15 | Mobilfunknetz | | |
| 16 | Kommunikationsverbindung | | |

## Patentansprüche

1. Verfahren zum Betrieb eines Kommunikationssystems, insbesondere Zugangssystems, mit einer technischen Einrichtung (3), insbesondere einem elektronischen Türschloss, und einem mobilen Endgerät (10), das eine datentechnische Kommunikationsschnittstelle (11) aufweist, **wobei** eine physisch von der technischen Einrichtung (3) getrennte Kommunikationseinrichtung (4) vorgesehen ist, welche ebenfalls eine datentechnische Kommunikationsschnittstelle (11) aufweist, wobei eine datentechnische Kommunikationsverbindung zwischen dem mobilen Endgerät (10) einerseits und der technischen Einrichtung (3) andererseits unter Zwischenordnung der Kommunikationseinrichtung (4) ausgebildet wird, wobei die technische Einrichtung (3) und die Kommunikationseinrichtung (4) mittels Kurzstrecken-Funktechnik miteinander kommunizieren, wobei zwischen dem mobilen Endgerät (10) und der Kommunikationseinrichtung (4), insbesondere per Wide-Area-Network eine datentechnische Kommunikationsverbindung (16, 17) ausgebildet wird, wobei das mobile Endgerät (10) und die Kommunikationseinrichtung (4) oder das mobile Endgerät (10) und die technische Einrichtung (3) direkt miteinander kommunizieren und wobei das mobile Endgerät (10) Öffnungs- und/oder Schließbefehle an das elektronische Schloss (3) übermittelt.

2. Verfahren nach Anspruch 1, **dadurch gekennzeichnet, dass** als mobiles Endgerät (10) ein Mobiltelefon, ein Smartphone, ein Tablet-Computer und/oder ein Notebook verwendet wird.

3. Verfahren nach einem der vorangehenden Ansprüche, **dadurch gekennzeichnet, dass** als datentechnische Kommunikationsschnittstelle (6, 7, 8, 11) eine Bluetooth-, LAN-, WLAN-, oder Wide-Area-Network-Schnittstelle verwendet wird.

4. Verfahren nach einem der vorangehenden Ansprüche, **dadurch gekennzeichnet, dass** zwischen dem mobilen Endgerät (10) und der Kommunikationseinrichtung (4) per Internet (15) eine datentechnische Kommunikationsverbindung (16, 17) ausgebildet wird.

5. Verfahren nach einem der vorangehenden Ansprüche, **dadurch gekennzeichnet**, dassdas mobile Endgerät (10) zunächst eine Autorisierungs-Anfrage an die Kommunikationseinrichtung (4) sendet und dass im Falle einer Autorisierung anschließend zwischen dem mobilen Endgerät (10) und der technischen Einrichtung (3) eine direkte datentechnische Kommunikationsverbindung (19, 20, 21) ausgebildet wird..

6. Verfahren nach einem der vorangehenden Ansprüche, **dadurch gekennzeichnet, dass** ein Rechnersystem (12) vorgesehen ist, wobei zwischen dem Rechnersystem (12) und der Kommunikationseinrichtung (4) eine datentechnische Kommunikationsverbindung ausgebildet wird.

7. Verfahren nach einem der vorangehenden Ansprüche, **dadurch gekennzeichnet, dass** im Falle eines Manipulationsversuchs an der Kommunikationseinrichtung (4), dem Türschloss (3), dem Rechnersystem (12) und/oder dem mobilen Endgerät (10) eine Autorisierung des mobilen Endgeräts (10) aufgehoben wird.

8. Verfahren nach einem der vorangehenden Ansprüche, **dadurch gekennzeichnet, dass** ein Bild der als Kamera ausgebildeten Kommunikationseinrichtung (4) an ein zuvor autorisiertes mobiles Endgerät (10) übertragen wird.

9. Verfahren nach einem der vorangehenden Ansprüche, **dadurch gekennzeichnet, dass** der Kommunikationseinrichtung (4) und/oder dem Rechnersystem (12) per DDNS eine nach außen feste Kennung zugewiesen wird.

10. Verfahren nach einem der vorangehenden Ansprüche, **dadurch gekennzeichnet, dass** zwischen verschiedenen technischen Einrichtungen (3, 4, 5) eine direkte datentechnische Kommunikationsverbindung (22, 23) ausgebildet wird.

11. Verfahren nach einem der vorangehenden Ansprüche, **dadurch gekennzeichnet, dass** die als elektronische Schloss ausgebildete technische Einrichtung (3) in Abhängigkeit einer elektronischen Bilderkennung der als Kamera ausgebildeten Kommunikationseinrichtung (4) automatisiert betätigt wird.

12. Verfahren nach einem der vorangehenden Ansprüche, **dadurch gekennzeichnet, dass** eine Betätigung der als elektronisches Schloss ausgebildeten technischen Einrichtung (3) dazu führt, dass die Kommunikationseinrichtung (4) eingeschaltet wird.

13. Verfahren nach einem der vorangehenden Ansprüche, **dadurch gekennzeichnet, dass** in Abhängigkeit einer elektronischen Bilderkennung der als Kamera ausgebildeten Kommunikationseinrichtung (4) weitere technische Einrichtungen (3, 4, 5) angesteuert werden, insbesondere eine Heizungsanlage betätigt wird.
